# EUROPEAN PATENT APPLICATION

(11) **EP 3 816 969 A1**
(43) Date of publication of application: **05.05.2021**
(21) Application number: 20202161.4
(22) Date of filing: 15.10.2020
(51) Int. Cl.: G08G 5/00, G08G 5/02, G08G 5/04, G01C 23/00

(54) **SYSTEM AND METHOD FOR CALCULATING A TURN TO JOIN A TRACK BEHIND A PRECEDING AIRCRAFT WHILE MAINTAINING A SPECIFIED SPACING INTERVAL**

(30) Priority: 01.11.2019 US 201916672117
(71) Applicant: Honeywell International Inc., Charlotte, NC 28202 (US)
(72) Inventor: BOUDA, Tomas, Charlotte, NC 28202 (US); SOSOVICKA, Robert, Charlotte, NC 28202 (US)
(74) Representative: LKGlobal UK Ltd.

(57) **Abstract**

A visualization assistance system for providing visual assistance to flight crew on an ownship aircraft is provided. The visualization assistance system comprises a controller configured to: receive a designation of a target aircraft for the ownship aircraft to follow requiring execution of a turn to join a track behind the target aircraft; receive flight crew specified spacing information comprising a minimum separation level to be maintained between the designated target aircraft and the ownship aircraft; predict an amount of travel for the ownship aircraft before commencing the turn that after completion joins the ownship aircraft at a joining point to the track behind the target aircraft and maintains the specified minimum separation level; and cause the predicted amount of travel to be graphically displayed on a flight deck display for use by the flight crew when determining when to initiate the turn to join the track behind the target aircraft.

## Description

### TECHNICAL FIELD

Embodiments of the subject matter described herein relate to flight crew workload reduction aids. More particularly, embodiments of the subject matter relate to systems and methods for estimating when to initiate a turn to join a track behind a preceding aircraft while maintaining a specified spacing interval.

### BACKGROUND

CDTI Assisted Visual Separation (CAVS) may allow a flight crew of an ownship aircraft to maintain a specified separation from a preceding aircraft that the ownship aircraft follows when visual contact is lost (*e.g.,* due to hazy or night conditions) by using the information provided by the CDTI (Cockpit Display of Traffic Information) as a substitute for an out-the-window view. To join a track to follow a preceding aircraft, an ownship aircraft may have to execute a turn. The estimation of when to commence the turn while attempting to maintain visual separation requirements can be a demanding task. The flight crew must consider the distance between the preceding and ownship aircraft, the speed of both aircraft, current wind conditions, and the minimum safe or required separation with which the ownship aircraft must comply after the turn is performed. This can place a substantial burden on a flight crew member such as the pilot.

Hence, it is desirable to provide systems and methods for assisting the flight crew with determining when to initiate a turn to allow an ownship aircraft to join a track behind a preceding aircraft. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A visualization assistance system for providing visual assistance to flight crew on an ownship aircraft during flight is disclosed. The system includes a controller having a processor configured by programming instructions on non-transient computer readable media. The controller is configured by the programming instructions to: receive a designation of a target aircraft for the ownship aircraft to follow requiring execution of a turn by the ownship aircraft to join a track behind the target aircraft; receive flight crew specified spacing information that includes a minimum separation level (time or distance) to be maintained between the designated target aircraft and the ownship aircraft after completion by the ownship aircraft of a turn to join the track behind the target aircraft; predict an amount of travel (in time or distance) for the ownship aircraft before commencing the turn that after completion joins the ownship aircraft at a joining point to the track behind the target aircraft and maintains the specified minimum separation level; and cause the predicted amount of travel (and optionally a projected turn path) to be graphically displayed on a flight deck display in the ownship aircraft for use by the flight crew when determining when to initiate the turn to join the track behind the target aircraft.

A processor implemented method in an aircraft for providing visual assistance to flight crew during flight is provided is disclosed. The method includes: receiving, by the processor, a designation of a target aircraft for an ownship aircraft to follow requiring execution of a turn by the ownship aircraft to join a track behind the target aircraft; receiving, by the processor, flight crew specified spacing information that includes a minimum separation level (time or distance) to be maintained between the designated target aircraft and the ownship aircraft after completion by the ownship aircraft of a turn to join the track behind the target aircraft; predicting, by the processor, an amount of travel (in time or distance) for the ownship aircraft before commencing the turn that after completion joins the ownship aircraft at a joining point to the track behind the target aircraft and maintains the specified minimum separation level; and causing, by the processor, the predicted amount of travel (and optionally a projected turn path) to be graphically displayed on a flight deck display in the ownship aircraft for use by the flight crew when determining when to initiate the turn to join the track behind the target aircraft.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a diagram depicting an example operating scenario in which visualization assistance cues may be provided for flight crew use, in accordance with some embodiments;
FIG. 2 is a block diagram of an example visualization assistance system, in accordance with some embodiments;
FIGS. 3A, 3B, 3C, 3D, and 3E are diagrams depicting example visualization assistance cues that the example visualization system may cause to be displayed on a ND for flight crew use during an approach using visual separation rules, in accordance with some embodiments;
FIG. 4 is a diagram of two example operating scenarios for an ownship aircraft to join a track behind a preceding aircraft, in accordance with some embodiments;
FIG. 5 is an example data flow diagram for an example visualization assistance system that provides visual assistance cues to flight crew during flight before commencing a turn to join a track behind a preceding aircraft, in accordance with some embodiments;
FIG. 6 is a process flow chart depicting an example process in an aircraft for providing visual assistance cues to flight crew during flight before commencing a turn to join a track behind a preceding aircraft, in accordance with some embodiments;
FIG. 7 is a block diagram depicting example measurements and calculations that can be made when predicting an amount of travel (in time or distance) for the ownship aircraft before commencing a turn to join a track behind a target or preceding aircraft, in accordance with some embodiments;
FIG. 8 is a process flow chart depicting an example process in an aircraft for performing calculations to predict an amount of travel (in time or distance) for the ownship aircraft before commencing a turn to join a track behind a target or preceding aircraft, in accordance with some embodiments;
FIG. 9 is an example screenshot of an example navigation display that provides an example graphical depiction of a visual cue for alerting a flight crew as to when to initiate a turn to join a track behind a preceding aircraft, in accordance with some embodiments;
FIG. 10A is an example screenshot of an example synthetic vision system on a primary flight display that provides an example graphical depiction of a visual cue for alerting a flight crew as to when to initiate a turn to join a track behind a preceding aircraft, in accordance with some embodiments; and
FIG. 10B is an example screenshot 1010 of an example horizontal situation indicator on a primary flight display that provides an example graphical depiction of a visual cue for alerting a flight crew as to when to initiate a turn to join a track behind a preceding aircraft, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, *e.g.,* memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques and articles for calculating an amount of travel for an ownship aircraft to a position at which to make a turn to join a track behind a preceding aircraft and for providing a graphical presentation of the amount of travel and the turn to the flight crew. The described apparatus, systems, techniques and articles can alert a flight crew member, such as the pilot, as to when to commence a turn to join a track behind a preceding aircraft and maintain a specific time or distance separation goal during visual separation operations. Use of the described apparatus, systems, techniques and articles can result in increased flight crew situational awareness, allow the flight crew to better estimate the final separation in time or distance on initial or final approach, and result in fuel savings and reduced time in the air. Use of the described apparatus, systems, techniques and articles can result in increased airport throughput and increased runway capacity.

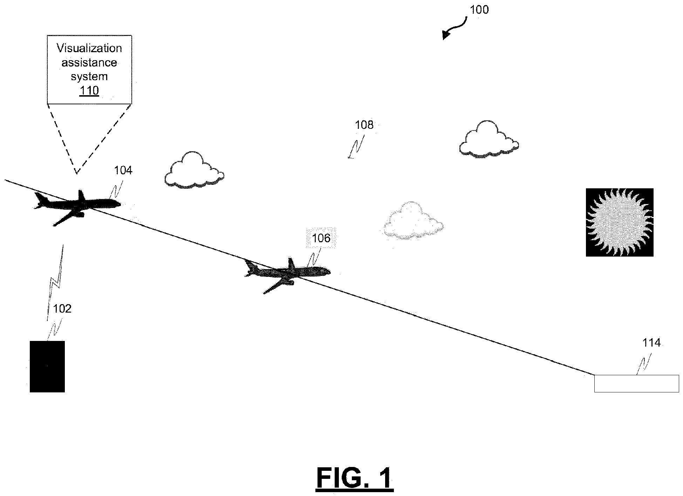

FIG. 1 is a diagram depicting an example operating scenario 100 in which visualization assistance cues may be provided for flight crew use. In poor visibility situations it may be difficult for the flight crew on an ownship aircraft 104 to maintain a desired visual separation from a target aircraft 106. To support flight crew situation and traffic awareness, the apparatus, systems, techniques and articles described herein provide visualization assistance cues on one or more cockpit display screens that can help the flight crew maintain separation between a target aircraft 106 and an ownship aircraft 104 during an approach using visual separation rules.

In the example scenario 100, air traffic control (ATC) 102 provides clearance information to the flight crew on an ownship aircraft 104 indicating the identification designation for a target aircraft 106 to follow, for example, during a landing procedure. The flight crew of the ownship aircraft 104 may report "Traffic in sight" to ATC 102, designate the target aircraft 106 in its aircraft equipment, and select an alerting distance threshold (*e.g*., a pre-selected distance) as a minimum separation distance between the ownship aircraft 104 and the target aircraft 106 the flight crew would like to maintain. The flight crew of the ownship aircraft 104 may adjust the ownship aircraft speed based on an out the window view of the target aircraft 106 to maintain a desired ownship aircraft separation from the target aircraft 106. If visual contact with the target aircraft 106 is lost or impaired (*e.g*., due to haze 108), the flight crew may adjust the aircraft speed of the ownship aircraft 104 based on information provided by a visualization assistance system 110 to maintain ownship aircraft separation. Use of the visualization assistance system 110 can improve flight crew situational awareness. Use of the visualization assistance system 110 may end when the target aircraft 106 lands, *e.g.,* at a runway 114.

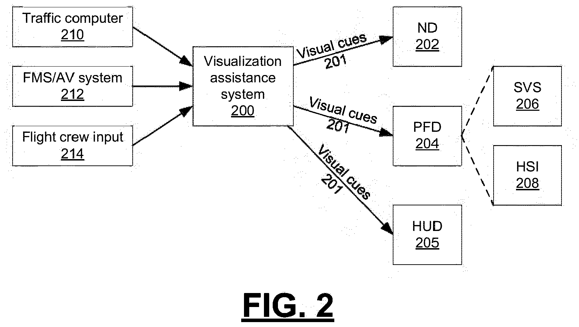

FIG. 2 is a block diagram of an example visualization assistance system 200. The example visualization assistance system 200 is configured to provide visual cues 201 to flight crew on multiple displays - a navigation display (ND) 202, a primary flight display (PFD) 204, and/or a heads up display (HUD) 205 - while an ownship aircraft follows a preceding (*e.g.,* lead or target) aircraft during an approach procedure that requires the use of visual separation rules. This can help make the flight crew more situational aware as the flight crew adjusts its view between the window to the outside, the ND 202, the PFD 204, and/or HUD 205. For a PFD 204 that provides both a synthetic vision system (SVS) 206 and a horizontal situation indicator (HSI) 208, the example visualization assistance system 200 is configured to provide visual cues to both the SVS 206 and the HSI 208, to additionally improve the situational awareness of flight crew by providing four different sources of visual cues. The example visualization assistance system 200 is configured to retrieve traffic data from a traffic computer 210 onboard the ownship aircraft from a traffic source such as ADS-B, ADS-R, TIS-B or other data from the preceding aircraft, aircraft data from avionics systems 212 such as the FMS (flight management system), and flight crew input 214.

The example visualization assistance system 200 is implemented using a controller. The controller includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and non-volatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

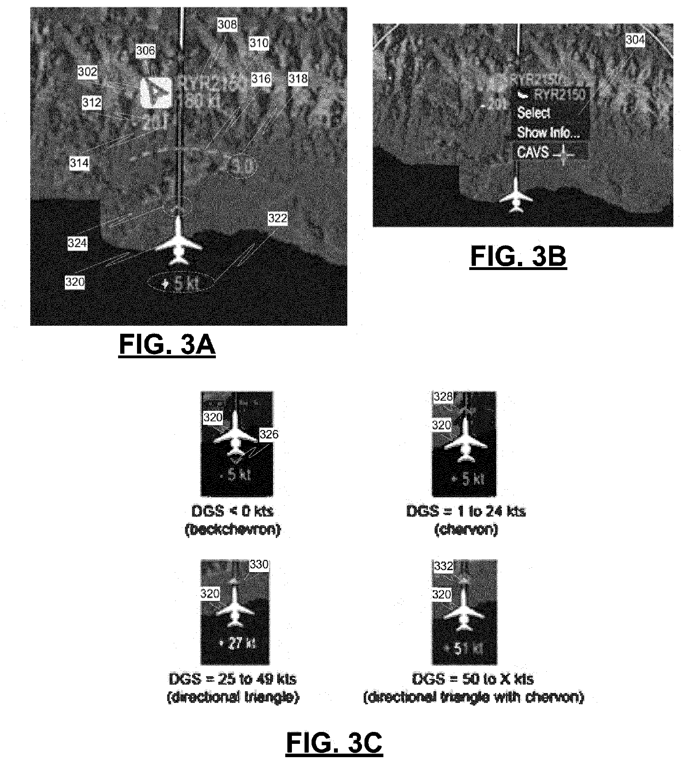

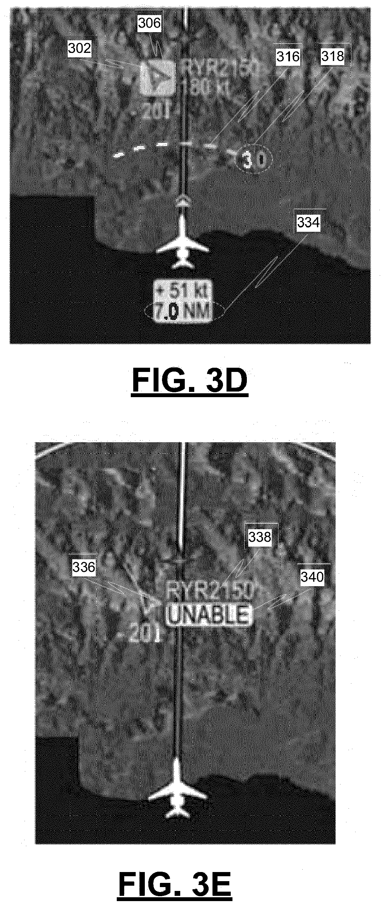

FIGS. 3A, 3B, 3C, 3D, and 3E are diagrams depicting example visualization assistance cues that the example visualization system 200 may cause to be displayed on a ND 202 for flight crew use during an approach using visual separation rules.

The example visualization assistance system 200 is configured to receive a selection of a target icon 302, that represents a target aircraft ahead of the ownship aircraft. The ND may display one or more potential target aircraft via icons. The selection of an icon 302 may cause the opening of a dialog box 304 from which the selected icon and the aircraft represented by the icon 302 may be designated as traffic to follow (TTF) using the example visualization assistance system 200.

Upon receiving a selection, the example system 200 is configured to make the selected target icon 302 become more visually pronounced, for example, by changing the color of the icon 302 (*e.g.* to green) and/or causing an area 306 surrounding the target icon to be displayed in a specific shape or color (*e.g.,* green box). The example system 200 is configured to cause the display of a call sign (or flight ID) indicator 308 that provides the call sign/flight ID of the target aircraft, cause a display of a ground speed indicator 310 that provides the ground speed of the target aircraft, and relative numerical altitude 312 with a + sign for traffic above the ownship aircraft or - sign for traffic below the ownship aircraft. Traffic the same altitude is displayed with no preceding symbol. Also, the fixed size vertical sense arrow 314 is displayed as an upward arrow for ascending traffic and a downward arrow for descending traffics. The example system 200 is configured to provide a range ring symbol 316 that indicates a relative distance in front of an ownship aircraft symbol on the ND and a numeric value 318 for a flight crew selected minimum range value wherein the minimum range value (threshold value) is equal to a minimum flight crew selected desired separation distance between the target aircraft and the ownship aircraft. The example system 200 is configured to cause the distance between the selected target icon 302, the range ring symbol 316 and an ownship aircraft symbol 320 on the ND to be proportional to the horizontal distance between the actual target aircraft, the threshold distance and the actual ownship aircraft. The visualization assistance system 200 is further configured to systematically adjust the position of the selected target icon 302 relative to the first range ring symbol 316 and the ownship aircraft symbol 320 on the ND

The example system 200 is further configured to provide a differential ground speed widget 322 that provides an alpha numeric indication of the differential ground speed (DGS) between the target aircraft and the ownship aircraft, and a differential ground speed symbol 324 that provides a graphical indication of whether the ownship aircraft is slower or faster than preceding aircraft 306. The differential ground speed symbol 324 is configured to provide a differential speed indicator symbol that indicates a range of differential speeds between the target and the ownship aircraft. In one example, a back chevron 326 below an ownship aircraft symbol 320 indicates a negative differential ground speed (*e.g.,* the ownship aircraft speed is slower than preceding aircraft), a single chevron 328 above the ownship aircraft symbol 320 indicates a positive differential speed of 1 to 24 knots (*e.g.,* the ownship aircraft is slightly faster that preceding aircraft), a directional triangle 330 above the ownship aircraft symbol 320 indicates a positive differential speed of 25 to 49 knots, and a directional triangle with a chevron 332 above the ownship aircraft symbol 320 indicates a positive differential speed of 50 or more knots. The example visualization assistance system 200 may also be configured to cause the display of the horizontal range between the target aircraft and the ownship aircraft in a location 334 on the ND adjacent to the differential ground speed magnitude. When the distance between the ownship aircraft and the target aircraft is less than the flight crew selected minimum range value 318 or the received traffic data (*e.g.,* ADS-B data), which provides data from the target aircraft on its position, heading, and velocity, is of low quality, the example visualization assistance system 200 is configured to cause a caution alert to be presented, for example, by changing the color of the target symbol 336 and call sign/flight ID 338 (*e.g.,* to an amber color), to cause the display of a label 340 (*e.g.,* an UNABLE label) adjacent to the traffic icon 336, and to cause the area surrounding the target icon (*e.g.,* area 306) to no longer be displayed in the specific shape or color in which it was displayed before the presentation of the caution alert.

To provide visual cues to the flight crew on multiple displays (*e.g*., ND 202 and PFD 204), the example visualization assistance system 200 is configured to provide icon, widgets and symbols on the PFD 204 that are similar to those provided by the visualization assistance system 200 on the ND 202.

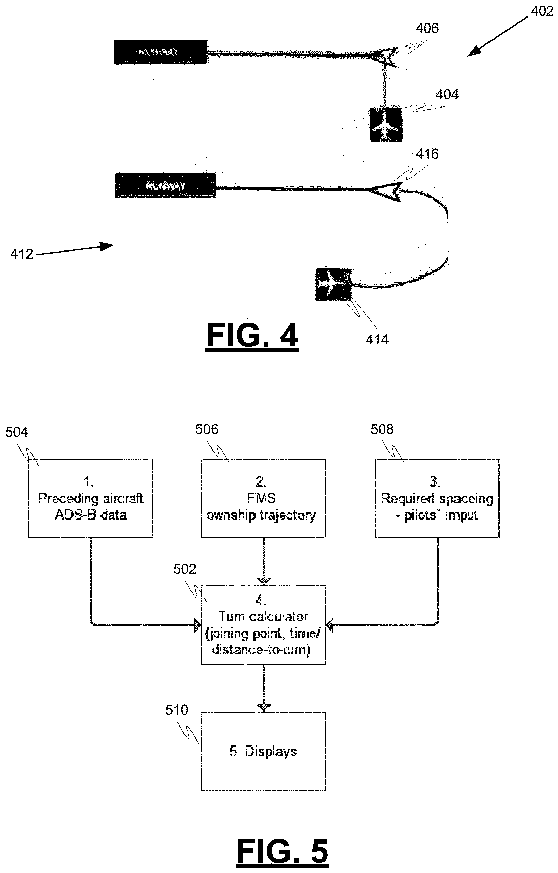

FIG. 4 is a diagram of two example operating scenarios 402, 412 for an ownship aircraft 404 to join a track behind a preceding aircraft 406. In the first example operating scenario 402, the ownship aircraft 404 must perform an approximately 90 degree turn to join a track behind the preceding aircraft 406. In the second example operating scenario 412, the ownship aircraft 414 must perform an approximately 180 degree turn to join a track behind the preceding aircraft 416. In both example scenarios 402, 412, the estimation of when and/or where to commence the turn can be a demanding task. The pilot must consider the position and speeds of both the preceding aircraft and the ownship aircraft, current wind conditions, and a minimum safe or required separation distance to maintain after the turn is performed. Additionally, ATC may issue a "not less than" separation requirement which would provide further bounds to the separation requirement between the ownship aircraft and preceding aircraft. If the achieved separation is considered as too close by the flight crew or ATC, a go-around procedure may need to be performed, which results in extra time in the air and increased fuel consumption.

FIG. 5 is an example data flow diagram for an example visualization assistance system that provides visual assistance cues to flight crew during flight before commencing a turn to join a track behind a preceding aircraft. The example visualization assistance system includes a turn calculator controller 502 comprising one or more processors configured by programming instructions on non-transient computer readable media. The example turn calculator controller 502 is configured to retrieve preceding aircraft trajectory data 504 such as position, velocity, and heading data, for example, through ADS-B data; ownship trajectory data 506, such as ownship aircraft GPS position, ground speed, and wind data, from an FMS and/or other avionics system onboard the ownship aircraft; and required spacing data 508 (in time and/or distance), for example, from pilot input. The order in which the preceding aircraft trajectory data 504, ownship aircraft trajectory data 506, and required spacing data 508 is retrieved is not essential. The example turn calculator controller 502 uses the retrieved preceding aircraft trajectory data 504, ownship trajectory data 506, and required spacing data 508 to calculate a floating joining point at which the ownship aircraft is estimated to join a track behind the preceding aircraft and an estimated time and/or distance to a floating turn point at which the ownship is estimated to initiate a turn to reach the floating joining point. The example turn calculator controller 502 is configured to provide an ongoing calculation of the potential floating joining point and time and/or distance to turn. The example turn calculator controller 502 is further configured to cause a display of the calculated floating joining point, estimated time to the floating turn point, and estimated distance to the floating turn point to be displayed on one or more cockpit displays, such as a navigation display, primary flight display, and/or head up display.

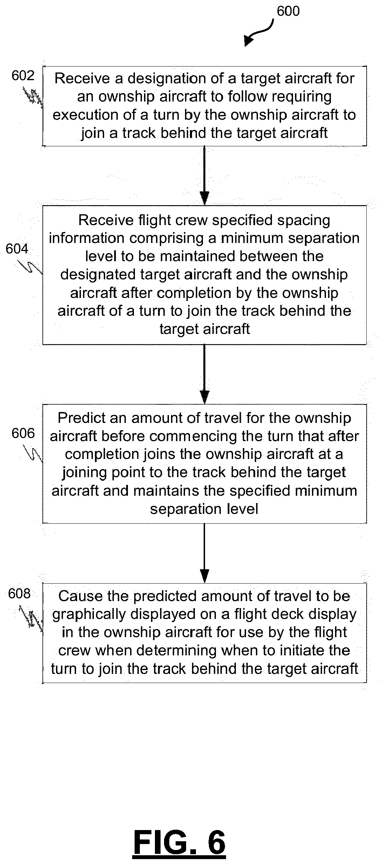

FIG. 6 is a process flow chart depicting an example process 600 in an aircraft for providing visual assistance to flight crew during flight. The order of operation within the process 600 is not limited to the sequential execution as illustrated in the figure but may be performed in one or more varying orders as applicable and in accordance with the present disclosure.

The example process 600 includes receiving, by the processor, a designation of a target aircraft for an ownship aircraft to follow requiring execution of a turn by the ownship aircraft to join a track behind the target aircraft (operation 602). The receiving a designation of a target aircraft for an ownship aircraft to follow may include receiving, by the flight crew, the designation of a target aircraft via an ATC visual separation clearance message to the flight crew that indicates a target aircraft for an ownship aircraft to follow and/or receiving a designation of a target aircraft for an ownship aircraft to follow from the flight crew via a flight deck display such as selection via a touchscreen interface on a cockpit display, such as the Navigation display.

The example process 600 includes receiving, by the processor, flight crew specified spacing information comprising a minimum separation level (expressed in time or distance) to be maintained between the designated target aircraft and the ownship aircraft after completion by the ownship aircraft of a turn to join the track behind the target aircraft (operation 604). The flight crew specified spacing information may have a value that is greater than or equal to spacing information included in an ATC visual separation clearance message.

The example process 600 includes predicting, by the processor, an amount of travel (expressed in time or distance) for the ownship aircraft before commencing the turn that after completion joins the ownship aircraft at a joining point to the track behind the target aircraft and maintains the specified minimum separation level (operation 606). Predicting the amount of travel may include predicting the amount of travel using target aircraft trajectory data (such as position and speed), ownship aircraft trajectory data, and environmental conditions (such as wind, temperature, etc.) from ownship sensors or any other information source. Predicting the amount of travel may further include receiving the target aircraft trajectory data from the target aircraft (for example, by the ADS-B data or some other data source).

The example process 600 includes causing, by the processor, the predicted amount of travel (and optionally a floating turn point and/or projected turn path) to be graphically displayed on a flight deck display in the ownship aircraft for use by the flight crew when determining when to initiate the turn to join the track behind the target aircraft (operation 608). Causing the predicted amount of travel to be graphically displayed on a flight deck display may include causing the predicted amount of travel to be graphically displayed on a flight deck display along with a graphical user interface (GUI) element representative of the target aircraft and a GUI element representative of the ownship aircraft. Causing the predicted amount of travel to be graphically displayed may include causing a projected turn path to be graphically displayed. Predicting an amount of travel (in time or distance) for the ownship aircraft before commencing the turn may include calculating the position where the ownship aircraft commences the turn and/or calculating the time to the position where the ownship aircraft commences the turn based on the respective position and velocity of the ownship aircraft and target aircraft.

The flight crew may then follow the predicted amount of travel (and optionally displayed projected turn path) that is graphically depicted on a flight deck display to perform a turn. When the turn is performed and the ownship aircraft a joins track behind preceding aircraft, the minimum separation represented by time or distance is not violated. The flight crew may continue the approach to land behind the preceding aircraft.

Performance of the example process 600 results in the selection of a floating (not fixed) joining point (latitude/longitude position) at which the ownship aircraft joins a track behind the preceding aircraft. The joining point is not preselected or anyhow specified by the flight crew. The "joining point" is a floating point (not a fixed point) that is continuously recalculated with respect to wind and positions and speeds of the ownship and target aircraft.

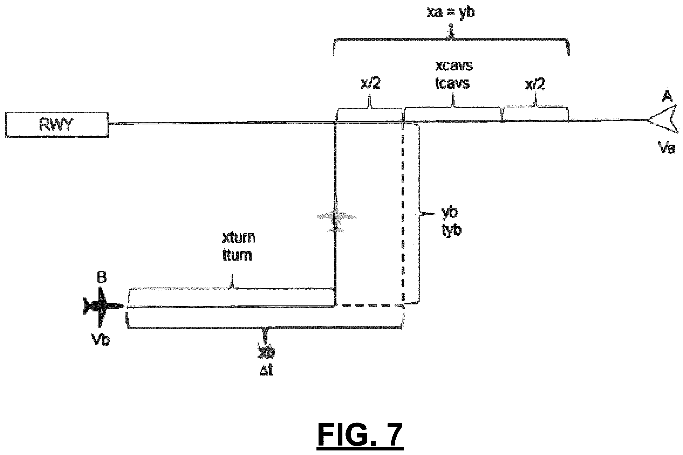

FIG. 7 is a block diagram depicting example measurements and calculations that can be made when predicting an amount of travel (in time or distance) for the ownship aircraft before commencing a turn to join a track behind a target or preceding aircraft. These example measurements and calculations are based on simplified and limited physical and geometrical considerations and assumptions for one specific operational scenario and are not meant to be fully applicable instructions.

The symbols in the figure have the following meaning: A represents the preceding aircraft; B represents the ownship aircraft; *Va* represents the velocity of aircraft A; *Vb* represents the velocity of aircraft B; *Δt* represents the travel time of aircraft B to reach a point where both aircraft are next to each other; *xb* represents the travel distance of aircraft B to reach a point where both aircraft are next to each other; *yb* represents the travel distance of aircraft B in the y-axis to join a track behind aircraft A; *tyb* represents the amount of time aircraft B needs to travel yb; *xa* represents the distance that aircraft A travels while aircraft B travels the travel distance (yb); *tcas* represents the preselected time (or distance) inserted by pilots; *xcavs* represents the distance that aircraft A travels for the preselected time (or distance) inserted by pilots; *x*/*2* represents a distance which adjusts *xb* to ensure that preselected time *tcas* or distance *xcavs* will be reached; *tturn* represents the time to the position where aircraft B starts to turn; and *xturn* represents the position where aircraft B starts to turn. These example measurements and calculations are applicable for the example operating scenario 412 depicted in FIG. 4. These example measurements and calculations can be adjusted for applicability to other operating scenarios, such as example scenario 402 for instance. These example measurements and calculations are an example of measurements and calculations from one operating scenario. Other measurements and calculations may be applied for this example operating scenario 412 or for other operating scenarios.

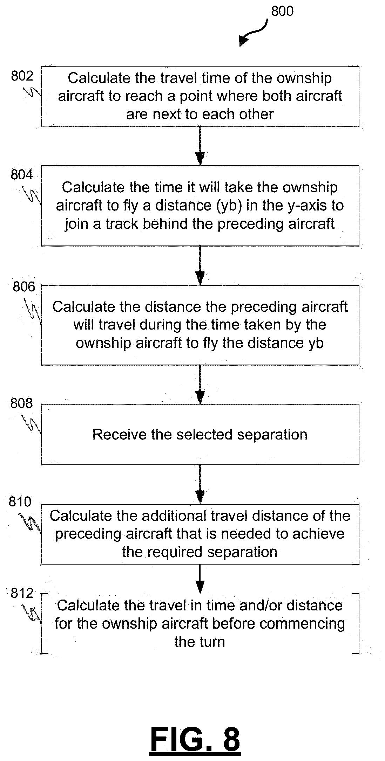

FIG. 8 is a process flow chart depicting an example process 800 in an aircraft for performing calculations to predict an amount of travel (in time or distance) for the ownship aircraft before commencing a turn to join a track behind a target or preceding aircraft. The example process 800 is based on simplified and limited physical and geometrical considerations and assumptions for a specific operational scenario (*e.g*., operating scenario 412) and is not intended to be fully complete instructions for all operational scenarios. Many of the measurements and calculations correspond to measurements and calculations depicted in FIG. 7. The order of operation within the process 800 is not limited to the sequential execution as illustrated in the figure, but may be performed in one or more varying orders as applicable and in accordance with the present disclosure.

The example process 800 includes calculating the travel time (*Δt*) (operation 802), which may be calculated using the formula: *Δt* = *xb*/*ΔV,* where *Δt* represents the travel time of aircraft B (ownship aircraft) to reach a point where both aircraft A (target or preceding aircraft) and aircraft B are next to each other, *xb* is the half distance in the x-axis between aircraft A and aircraft B, and *ΔV* is the difference in velocity between aircraft A and aircraft B.

The example process 800 includes calculating the time (*tyb*) it will take aircraft B to fly a distance *yb* (operation 804). The time (*tyb*) may be calculated using the formula: *tyb* = *yblVb,* where *yb* represents the travel distance of aircraft B in the y-axis to join a track behind aircraft A, and *Vb* represents the speed of aircraft B.

The example process 800 includes calculating the distance (*xa*) the preceding aircraft will travel during the time taken by the ownship aircraft to fly the distance *yb* (operation 806). The distance (*xa*) may be calculated using the formula: *xa* = *Va* ^{∗} *tyb,* where *Va* represents the velocity of aircraft A, and *tyb* represents the amount of time aircraft B needs to travel the travel distance (yb). In this example, *xa* = *yb.*

The example process 800 includes receiving the selected separation (operation 808), which can be defined by the flight crew as a distance (*xcavs*) or time (*tcavs*)*.* When separation is defined as a time (*tcavs*)*,* then the distance (*xcavs*) may be calculated using the formula: *xcavs* = *Va ^{∗} tcavs,* where *Va* represents the velocity of aircraft A.

The example process 800 includes calculating the travel distance (*x*) (operation 810), which may be calculated using the formula: *x* = *xa* - *xcavs,* where *x* represents the additional travel distance which is needed to achieve the required separation, *xa* represents the distance that aircraft A travels while aircraft B travels the travel distance (yb) and *xcavs* represents the distance that aircraft A travels for the preselected separation distance inserted by pilots.

The example process 800 includes calculating the travel in time (*tturn*) and/or distance (*xturn*) for the ownship aircraft before commencing the turn (operation 812). The *tturn* may be calculated using the formula: *tturn* = *Δt* - *xl(2*Vb),* where *Δt* represents the time, where preceding aircraft (A) and ownship aircraft (B) travels to the position, where they are next to each other if they continue along their current travel path, *x* represents the additional travel distance which is needed to achieve the required separation, and *Vb* represents the velocity of aircraft B.

The amount of travel in distance (*xturn*) for the ownship aircraft before commencing the turn may be calculated using the formula: *xturn* = *Vb ^{∗} tturn,* where *Vb* represents the velocity of aircraft B, and *tturn* represents the time to the position where B starts to turn.

The example process 800 may use the following assumptions: aircraft positions in a form of lat/lon and speeds Vb and Va in a form of ground speed are taken from ADS-B or other source; and Va and Vb are expected as a constant and are equal. Also, in this simplified example, the wind effect is not considered as well as the impact of the real turn distances on the calculations. These example operations are applicable for the example operating scenario 412 depicted in FIG. 4. These example operations can be adjusted for applicability to other operating scenarios, such as example scenario 402 for instance. These example operations are an example of operations from one operating scenario. Other operations may be applied for this example operating scenario 412 or for other operating scenarios.

A system or method in an aircraft for performing calculations to predict an amount of travel (in time or distance) for an ownship aircraft before commencing a turn to join a track behind a preceding aircraft may be implemented as part of a visualization system (*e.g*., visualization system 110 or 200) that provides visualization cues such as those illustrated in FIGS. 3A-3E. The system or method for performing calculations to predict an amount of travel (in time or distance) for an ownship aircraft before commencing a turn to join a track behind a preceding aircraft, however, is not restricted for use as part of a visualization system (*e.g*., visualization system 110 or 200) that provides visualization cues such as those illustrated in FIGS. 3A-3E, but instead may be provided as a standalone system or method. The calculation and graphical depiction of a floating turn point may begin shortly after the flight crew provides a minimum separation level (in time or distance).

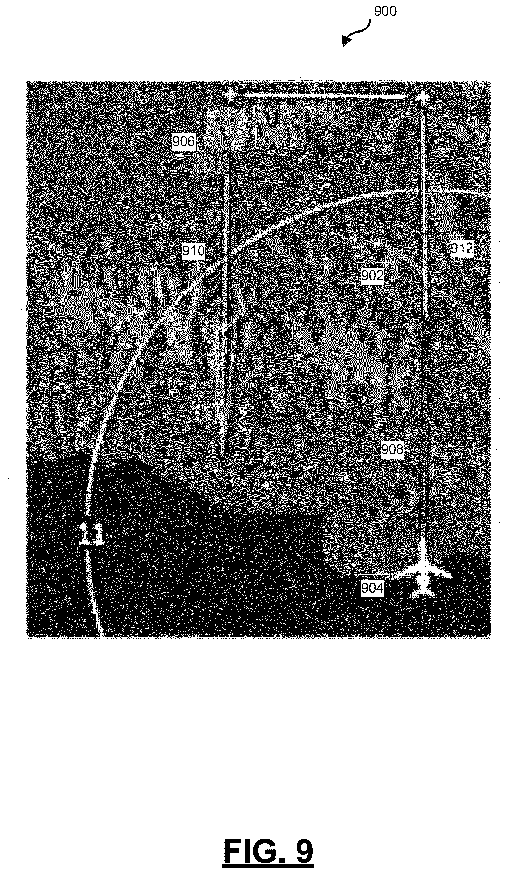

FIG. 9 is an example screenshot 900 of an example navigation display that provides an example graphical depiction of a visual cue 902 for alerting a flight crew as to when to initiate a turn to join a track behind a preceding aircraft. Depicted is an ownship aircraft 904, a preceding aircraft 906, a projected travel path 908 of the ownship aircraft, a projected travel path 910 of the preceding aircraft, and a projected turn graphical element 902 that indicates where (*e.g.,* at the turn point 912) on the projected travel path 908 of the ownship aircraft 904 the turn to join the track behind the preceding aircraft 906 should begin. Because the projected turn point 912 is continually recalculated, the projected turn graphical element 902 moves along the projected travel path 908 of the ownship aircraft 904 until the turn is performed.

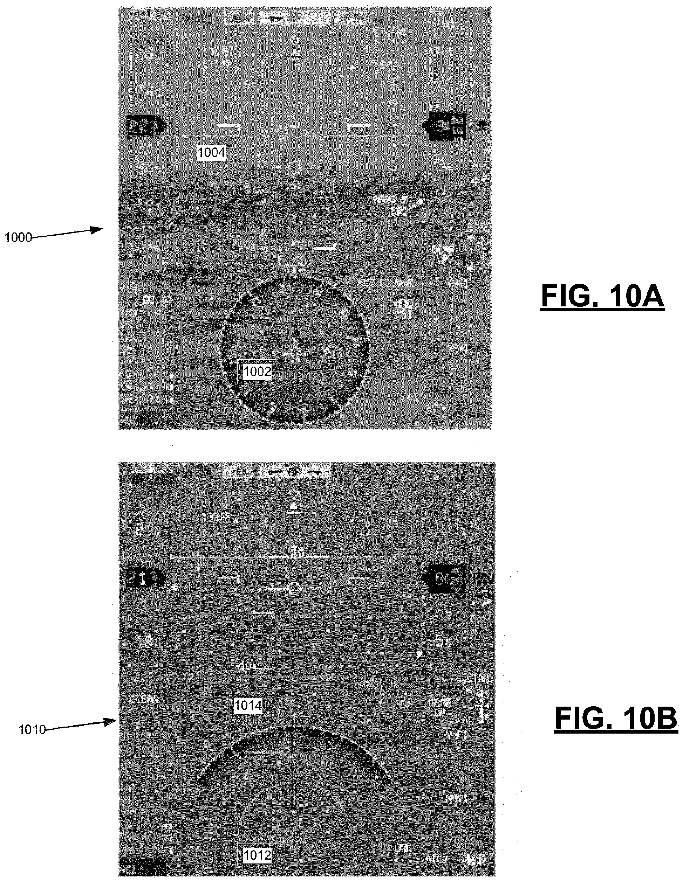

FIG. 10A is an example screenshot 1000 of an example synthetic vision system on a primary flight display that provides an example graphical depiction of a visual cue for alerting a flight crew as to when to initiate a turn to join a track behind a preceding aircraft. Depicted is a GUI symbol 1002 representing an ownship aircraft and a projected turn graphical element 1004 that indicates where (*e.g*., the turn point) on the projected travel path of the ownship aircraft the turn to join the track behind a preceding aircraft should begin. Because the projected turn point is continually recalculated, the projected turn graphical element 1004 moves along the projected travel path of the ownship aircraft until the turn is performed.

FIG. 10B is an example screenshot 1010 of an example horizontal situation indicator on a primary flight display that provides an example graphical depiction of a visual cue for alerting a flight crew as to when to initiate a turn to join a track behind a preceding aircraft. Depicted is a GUI symbol 1012 representing an ownship aircraft and a projected turn graphical element 1014 that indicates where (*e.g*., the turn point) on the projected travel path of the ownship aircraft the turn to join the track behind a preceding aircraft should begin. Because the projected turn point is continually recalculated, the projected turn graphical element 1014 moves along the projected travel path of the ownship aircraft until the turn is performed.

Described herein are apparatus, systems, techniques and articles for calculating an amount of travel for an ownship aircraft to a position at which to make a turn to join a track behind a target or preceding aircraft and for providing a graphical presentation of the amount of travel and the turn to the flight crew. The described apparatus, systems, techniques and articles can alert a flight crew member, such as the pilot, as to when to commence a turn to join a track behind a target or preceding aircraft and maintain a specific time or distance separation goal during visual separation operations. Use of the described apparatus, systems, techniques and articles can result in increased flight crew situational awareness, allow the flight crew to better estimate the final separation in time or distance on initial or final approach, and result in fuel savings and reduced time in the air. Use of the described apparatus, systems, techniques and articles can result in increased airport throughput and increased runway capacity.

In one embodiment, a visualization assistance system for providing visual assistance to flight crew on an ownship aircraft during flight is provided. The visualization assistance system comprises a controller configured by programming instructions on non-transient computer readable media. The controller is configured by the programming instructions to: receive a designation of a target aircraft for the ownship aircraft to follow requiring execution of a turn by the ownship aircraft to join a track behind the target aircraft; receive flight crew specified spacing information comprising a minimum separation level (*e.g.,* in time or distance) to be maintained between the designated target aircraft and the ownship aircraft after completion by the ownship aircraft of a turn to join the track behind the target aircraft; predict an amount of travel (*e.g.,* in time or distance) for the ownship aircraft before commencing the turn that after completion joins the ownship aircraft at a joining point to the track behind the target aircraft and maintains the specified minimum separation level; and cause the predicted amount of travel (and optionally a projected floating turn point and/or turn path) to be graphically displayed on a flight deck display in the ownship aircraft for use by the flight crew when determining when to initiate the turn to join the track behind the target aircraft.

These aspects and other embodiments may include one or more of the following features. The identity of the designated target aircraft may be communicated to the ownship aircraft via an ATC visual separation clearance message indicating a target aircraft for an ownship aircraft to follow. The flight crew specified spacing information may have a value that is greater than or equal to spacing information included in the ATC visual separation clearance message. The controller may be configured to receive the designation of a target aircraft for the ownship aircraft to follow from the flight crew via a flight deck display. To predict the amount of travel, the controller may be configured to predict the amount of travel using target aircraft trajectory data (position and speed), ownship aircraft trajectory data, and environmental conditions (*e.g*., wind, temperature, etc.) from ownship sensors or other internal or external information sources. The target aircraft trajectory data may be received from the target aircraft and may be received as ADS-B data or some other type of data. To cause the predicted amount of travel and a projected turn path to be graphically displayed on a flight deck display, the controller may be configured to cause the predicted amount of travel and a projected turn path to be graphically displayed on a flight deck display along with a graphical user interface (GUI) element representative of the target aircraft and a GUI element representative of the ownship aircraft. To cause the predicted amount of travel to be graphically displayed, the controller may be configured to cause a projected turn path to be graphically displayed. The amount of travel may be expressed in time and/or distance. To predict an amount of travel (*e.g.,* in time or distance) for the ownship aircraft before commencing the turn, the controller may be configured to: calculate a travel time of the ownship aircraft to reach a point where both aircraft are next to each other if they continue along their current travel path; calculate the time it will take the ownship aircraft to make a turn to join a track behind the target aircraft; calculate the distance the target aircraft will travel during the time taken by the ownship aircraft to make the turn; receive the selected separation; calculate the travel distance for the target aircraft that is needed to achieve the selected separation; and calculate the amount of travel (*e.g.,* in time or distance) for the ownship aircraft before commencing the turn. To calculate the amount of travel (*e.g.,* in time or distance) for the ownship aircraft before commencing the turn, the controller may be configured to: calculate the position where the ownship aircraft commences the turn; and/or calculate the time to the position where the ownship aircraft commences the turn. To receive the selected separation, the controller may be configured to calculate the separation distance by multiplying the ground speed of the target aircraft by a separation in time defined by the flight crew.

In another embodiment, a processor implemented method in an aircraft for providing visual assistance to flight crew during flight is provided. The method comprises: receiving, by the processor, a designation of a target aircraft for an ownship aircraft to follow requiring execution of a turn by the ownship aircraft to join a track behind the target aircraft; receiving, by the processor, flight crew specified spacing information comprising a minimum separation level (*e.g.,* in time or distance) to be maintained between the designated target aircraft and the ownship aircraft after completion by the ownship aircraft of a turn to join the track behind the target aircraft; predicting, by the processor, an amount of travel (*e.g.,* in time or distance) for the ownship aircraft before commencing the turn that after completion joins the ownship aircraft at a joining point to the track behind the target aircraft and maintains the specified minimum separation level; and causing, by the processor, the predicted amount of travel (and optionally a projected floating turn point and/or turn path) to be graphically displayed on a flight deck display in the ownship aircraft for use by the flight crew when determining when to initiate the turn to join the track behind the target aircraft.

These aspects and other embodiments may include one or more of the following features. The receiving a designation of a target aircraft for an ownship aircraft to follow may comprise receiving the designation of a target aircraft via an ATC visual separation clearance message indicating a target aircraft for an ownship aircraft to follow. The flight crew specified spacing information may have a value that is greater than or equal to spacing information included in the ATC visual separation clearance message. The receiving a designation of a target aircraft for an ownship aircraft to follow may comprise receiving a designation of a target aircraft for an ownship aircraft to follow from the flight crew via a flight deck display. The method, wherein predicting the amount of travel may comprise predicting the amount of travel using target aircraft trajectory data (*e.g*., position and speed), ownship aircraft trajectory data, and environmental conditions (*e.g*., wind, temperature, etc.) from ownship sensors or information sources internal or external to the ownship. The method may further comprise receiving the target aircraft trajectory data from the target aircraft (*e.g.,* as ADS-B data or some other type of data). Causing the predicted amount of travel to be graphically displayed on a flight deck display may comprise causing the predicted amount of travel to be graphically displayed on a flight deck display along with a graphical user interface (GUI) element representative of the target aircraft and a GUI element representative of the ownship aircraft. Causing the predicted amount of travel to be graphically displayed may comprise causing a projected turn path to be graphically displayed. The amount of travel may be expressed in time and/or distance. Predicting an amount of travel (*e.g.,* in time or distance) for the ownship aircraft before commencing the turn may comprise: calculating a travel time of the ownship aircraft to reach a point where both aircraft are next to each other if they continue along their current travel path; calculating the time it will take the ownship aircraft to make a turn to join a track behind the target aircraft; calculating the distance the target aircraft will travel during the time taken by the ownship aircraft to make the turn; receive the selected separation; calculating the travel distance for the target aircraft that is needed to achieve the selected separation; and calculating the amount of travel (*e.g.,* in time or distance) for the ownship aircraft before commencing the turn. Calculating the amount of travel (*e.g.,* in time or distance) for the ownship aircraft before commencing the turn may comprise: calculating the position (*e.g*., floating turn point) where the ownship aircraft commences the turn; and/or calculating the time to the position (*e.g*., floating turn point) where the ownship aircraft commences the turn. Receiving the selected separation may comprise calculating the separation distance by multiplying the ground speed of the target aircraft by a separation in time defined by the flight crew.

In another embodiment, non-transitory computer readable media encoded with programming instructions configurable to cause a processor to perform a method is provided. The method comprises: receiving, by the processor, a designation of a target aircraft for an ownship aircraft to follow requiring execution of a turn by the ownship aircraft to join a track behind the target aircraft; receiving, by the processor, flight crew specified spacing information comprising a minimum separation level (*e.g.,* in time or distance) to be maintained between the designated target aircraft and the ownship aircraft after completion by the ownship aircraft of a turn to join the track behind the target aircraft; predicting, by the processor, an amount of travel (*e.g.,* in time or distance) for the ownship aircraft before commencing the turn that after completion joins the ownship aircraft at a joining point to the track behind the target aircraft and maintains the specified minimum separation level; and causing, by the processor, the predicted amount of travel (and optionally a projected floating turn point and/or turn path) to be graphically displayed on a flight deck display in the ownship aircraft for use by the flight crew when determining when to initiate the turn to join the track behind the target aircraft.

These aspects and other embodiments may include one or more of the following features. The receiving a designation of a target aircraft for an ownship aircraft to follow may comprise receiving the designation of a target aircraft via an ATC visual separation clearance message indicating a target aircraft for an ownship aircraft to follow. The flight crew specified spacing information may have a value that is greater than or equal to spacing information included in the ATC visual separation clearance message. The receiving a designation of a target aircraft for an ownship aircraft to follow may comprise receiving a designation of a target aircraft for an ownship aircraft to follow from the flight crew via a flight deck display. The method, wherein predicting the amount of travel may comprise predicting the amount of travel using target aircraft trajectory data (*e.g*., position and speed), ownship aircraft trajectory data, and environmental conditions (*e.g*., wind, temperature, etc.) from ownship sensors or information sources internal or external to the ownship. The method may further comprise receiving the target aircraft trajectory data from the target aircraft (*e.g.,* as ADS-B data or some other type of data). Causing the predicted amount of travel to be graphically displayed on a flight deck display may comprise causing the predicted amount of travel to be graphically displayed on a flight deck display along with a graphical user interface (GUI) element representative of the target aircraft and a GUI element representative of the ownship aircraft. Causing the predicted amount of travel to be graphically displayed may comprise causing a projected turn path to be graphically displayed. The amount of travel may be expressed in time and/or distance. Predicting an amount of travel (*e.g.,* in time or distance) for the ownship aircraft before commencing the turn may comprise: calculating a travel time of the ownship aircraft to reach a point where both aircraft are next to each other if they continue along their current travel path; calculating the time it will take the ownship aircraft to make a turn to join a track behind the target aircraft; calculating the distance the target aircraft will travel during the time taken by the ownship aircraft to make the turn; receive the selected separation; calculating the travel distance for the target aircraft that is needed to achieve the selected separation; and calculating the amount of travel (*e.g.,* in time or distance) for the ownship aircraft before commencing the turn. Calculating the amount of travel (*e.g.,* in time or distance) for the ownship aircraft before commencing the turn may comprise: calculating the position (*e.g*., floating turn point) where the ownship aircraft commences the turn; and/or calculating the time to the position (*e.g*., floating turn point) where the ownship aircraft commences the turn. Receiving the selected separation may comprise calculating the separation distance by multiplying the ground speed of the target aircraft by a separation in time defined by the flight crew.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connections with the embodiments disclosed herein may be implemented not only for the described example operating procedure 412 (*e.g.,* turn from down-wind to final) but may also be applicable for other operational procedures on initial and final approach.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A visualization assistance system for providing visual assistance to flight crew on an ownship aircraft during flight, the visualization assistance system comprising a controller configured by programming instructions on non-transient computer readable media, the controller configured by the programming instructions to:
receive a designation of a target aircraft for the ownship aircraft to follow requiring execution of a turn by the ownship aircraft to join a track behind the target aircraft;
receive flight crew specified spacing information comprising a minimum separation level to be maintained between the designated target aircraft and the ownship aircraft after completion by the ownship aircraft of a turn to join the track behind the target aircraft;
predict an amount of travel for the ownship aircraft before commencing the turn that after completion joins the ownship aircraft at a joining point to the track behind the target aircraft and maintains the specified minimum separation level; and
cause the predicted amount of travel to be graphically displayed on a flight deck display in the ownship aircraft for use by the flight crew when determining when to initiate the turn to join the track behind the target aircraft.

2. The visualization assistance system of claim 1, wherein the designated target aircraft was communicated to the ownship aircraft via an ATC visual separation clearance message indicating a target aircraft for an ownship aircraft to follow.

3. The visualization assistance system of claim 2, wherein the flight crew specified spacing information has a value that is greater than or equal to spacing information included in the ATC visual separation clearance message

4. The visualization assistance system of claim 1, wherein to predict the amount of travel, the controller is configured to predict the amount of travel using target aircraft trajectory data, ownship aircraft trajectory data, and environmental conditions from ownship sensors or any other information source. 4

5. The visualization assistance system of claim 1, wherein to cause the predicted amount of travel to be graphically displayed on a flight deck display, the controller is configured to cause the predicted amount of travel and a projected turn path to be graphically displayed on a flight deck display along with a graphical user interface (GUI) element representative of the target aircraft and a GUI element representative of the ownship aircraft.

6. The visualization assistance system of claim 1, wherein to cause the predicted amount of travel to be graphically displayed, the controller is configured to cause a projected turn path to be graphically displayed.

7. The visualization assistance system of claim 1, wherein the amount of travel is expressed in time or distance.

8. The visualization assistance system of claim 1, wherein to predict an amount of travel (in time or distance) for the ownship aircraft before commencing the turn, the controller is configured to:
calculate a distance between the ownship aircraft and the target aircraft measured in a direction parallel to the runway direction;
calculate a time when the target aircraft and ownship aircraft would be next to each other if they continue along their current travel path;
calculate the position of the ownship aircraft when the target aircraft and ownship aircraft would be next to each other if they continue along their current travel path;
calculate the time it will take the ownship aircraft to fly a distance (yb) in the y-axis to join a track behind the target aircraft;
calculate the distance the target aircraft will travel during the time taken by the ownship aircraft to fly the distance yb;
receive the selected separation;
calculate the travel distance for the target aircraft when the ownship aircraft is to commence the turn; and
calculate the amount of travel for the ownship aircraft before commencing the turn.

9. The visualization assistance system of claim 8, wherein to calculate the amount of travel for the ownship aircraft before commencing the turn, the controller is configured to:
calculate the position where the ownship aircraft commences the turn; and/or
calculate the time to the position where the ownship aircraft commences the turn.

10. A processor implemented method in an aircraft for providing visual assistance to flight crew during flight, the method comprising:
receiving, by the processor, a designation of a target aircraft for an ownship aircraft to follow requiring execution of a turn by the ownship aircraft to join a track behind the target aircraft;
receiving, by the processor, flight crew specified spacing information comprising a minimum separation level to be maintained between the designated target aircraft and the ownship aircraft after completion by the ownship aircraft of a turn to join the track behind the target aircraft;
predicting, by the processor, an amount of travel for the ownship aircraft before commencing the turn that after completion joins the ownship aircraft at a joining point to the track behind the target aircraft and maintains the specified minimum separation level; and
causing, by the processor, the predicted amount of travel to be graphically displayed on a flight deck display in the ownship aircraft for use by the flight crew when determining when to initiate the turn to join the track behind the target aircraft.
